# EUROPEAN PATENT APPLICATION

(11) **EP 3 670 719 A1**
(43) Date of publication of application: **24.06.2020**
(21) Application number: 19214753.6
(22) Date of filing: 10.12.2019
(51) Int. Cl.: D01H 13/26, D01H 13/32, H04W 36/00, H04W 36/30, H04L 29/08, G05B 19/418, H04W 84/12

(54) **TEXTILE MACHINE OPERATION SUPPORT SYSTEM AND METHOD**

(30) Priority: 18.12.2018 JP 2018236082
(71) Applicant: Murata Machinery, Ltd., Kyoto-shi, Kyoto 601-8326 (JP)
(72) Inventor: Nakai, Masato, Kyoto, 612-8686 (JP); Kuwana, Tetsuya, Kyoto, 619-0237 (JP); Hosomi, Yuichi, Kyoto, 619-0237 (JP)
(74) Representative: Hoffmann Eitle

(57) **Abstract**

A textile machine operation support system comprises a plurality of textile machines, and a management device for analyzing operation information regarding operation of the plurality of textile machines. The operation information is transmitted from the textile machines to the management device, and a result of analysis of the operation information by the management device being transmitted to a portable terminal 13. Each of relays 12 and an access pointer 14 is immovably disposed at a fixed position, and includes a communication unit, a detection unit and a disconnection unit. The communication unit is connectable to the portable terminal 13 and is communicable to the portable terminal 13 connected thereto. The detection unit for detecting a radio field intensity of the portable terminal 13 connected to the relay 12 or the access pointer 14. The disconnection unit disconnects the portable terminal 13 when the radio field intensity detected by the detection unit becomes less than a threshold.

## Description

### BACKGROUND OF THE INVENTION

### 1. Field of the Invention

The present invention mainly relates to a textile machine operation support system.

### 2. Description of the Related Art

Patent Document 1: JP 2015-88782 A discloses a radio communications system including radio base station apparatuses and a communication terminal. Each radio base station apparatus functions as an access point to be wirelessly connected and communicate to the communication terminal. When one radio base station apparatus detects that a received signal intensity of radio wave from the communication terminal connected thereto is less than a threshold, the radio base station apparatus transmits handover information to another radio base station apparatus so as to urge the communication terminal to be connected to the other radio base station apparatus.

Patent Document 2: JP 2017-507565 A discloses a radio communications network including access points and a user's terminal. When the quality of radio communication between any access point and the user's terminal, the access point judges a target access point serving as another access point proposed to be connected to the user's terminal. When the target access point comes to meet a predetermined requirement, the connected access point transmits a message to propose to the user's terminal that the target access point should be connected to the user's terminal.

### SUMMARY OF THE INVENTION

In each of Patent Documents 1 and 2, each access point can designate another access point to be newly connected to a portable terminal (a communication terminal or a user's terminal). However, to effectively use this function of the access point, an application or so on for changing an access point according to command from the access point must be installed into the portable terminal. Further, in each of Patent Documents 1 and 2, a connection management method for a system (or network) including an access point and a portable terminal is described, however, any system including a relay is not described.

Consideration of the above-mentioned situation results in the present invention. A main object of the present invention is to provide a textile machine operation support system or a method for communication between an access pointer or a relay and a portable terminal, wherein when a communication status between the access pointer or relay and the portable terminal is not appropriate, the portable terminal is urged to be connected to another access pointer or relay.

The foregoing description is a problem to be solved by the present invention. Means for solving the problem and effects of the means will now be described.

In a first aspect of the present invention, a textile machine operation support system is configured as follows: The textile machine operation support system comprises a plurality of textile machines and a management device for analyzing operation information regarding operation of the plurality of textile machines. The textile machine operation support system is configured so as to transmit the operation information from the textile machines to the management device, and so as to transmit a result of analysis of the operation information by the management device to a portable terminal. The textile machine operation support system comprises a first radio communicator and a plurality of second radio communicators. The first radio communicator is connected to the management device so as to serve as an access pointer, and is immovably disposed at a fixed position. The plurality of second radio communicators are connected to the plurality of textile machines respectively so as to serve as relays each of which relays connection between the corresponding textile machine and the access pointer, and are immovably disposed at respective fixed positions. At least either the first radio communicator or each of the second radio communicators includes a communication unit, a detection unit and a disconnection unit. The communication unit is connectable to the portable terminal to communicate with the portable terminal connected thereto. The detection unit detects a radio field intensity of the portable terminal connected to the first radio communicator or the second radio communicator. The disconnection unit disconnects the portable terminal when the radio field intensity detected by the detection unit becomes less than a threshold.

Therefore, due to the disconnection of the portable terminal having an inappropriate communication status by the radio communicator (i.e., the first or second radio communicator), the portable terminal can be urged to be reconnected to another radio communicator having an appropriate communication status. Accordingly, the portable terminal can keep the appropriate communication status of any radio communicator connected thereto. The operator can promptly obtain the analysis result displayed on the portable terminal so that the analysis result can be used to optimize operation of the textile machines, to apply maintenance for problematic points, or for any other purpose. As a result, operability of the textile machines can be developed. Further, the above-mentioned processing can be easily adapted to various portable terminals because it does not require installation of an application for managing and changing connection of the radio communicator to the portable terminal so that the portable terminal does not need to be controlled in action except that the disconnection of the portable terminal may be needed.

Preferably, the textile machine operation support system is configured as follows: The communication unit is also communicable to any second radio communicator. The disconnection unit can distinguish whether the communication unit is connected to the portable terminal or the second radio communicator so that only if the portable terminal instead of the second radio communicator is connected to the communication unit, the disconnection of the portable terminal from the communication unit is automatically performed by the disconnection unit.

The above-mentioned configuration is based on consideration as follows: The communication status between the first radio communicator and the second radio communicator or between one second radio communicator and another second radio communicator is hardly variable. It cannot be said that after one second radio communicator is disconnected from the communication unit, any other second radio communicator or the first radio communicator, which has a communication status appropriate to serve as a relay or an access point for the communication unit, will surely exist. Therefore, the second radio communicator connected to the communication unit does not desire to be automatically disconnected from the communication unit. On the contrary, the communication status between the second radio communicator and the portable terminal may often become worse according to movement of the portable terminal. Therefore, the portable terminal connected to the communication unit desires to be automatically disconnected from the communication unit.

Preferably, the textile machine operation support system is configured as follows: At least either the first radio communicator or each of the second radio communicators includes a storage unit for storing MAC addresses of the respective second radio communicators. The disconnection unit compares the MAC address of the second radio communicator or the portable terminal connected to the communication unit with the MAC addresses of the respective second radio communicators stored by the storage unit so that the distinguishment of whether the portable terminal or the second radio communicator is connected to the communication unit is based on the comparison.

Therefore, such an easy process enables the disconnection unit to distinguish whether the second radio communicator or the portable terminal is connected to the communication unit.

Preferably, the textile machine operation support system is configured so that the disconnection unit disconnects the portable terminal from the communication unit when the radio field intensity of the portable terminal is less than the threshold repeatedly at predetermined numbered serial detection times or continuously for a predetermined detection period.

Therefore, in a case where the radio filed intensity is temporarily lowered and is quickly recovered to an appropriate level, the portable terminal connected to the communication unit is kept from being disconnected from the communication unit, thereby inhibiting waste disconnection of the portable terminal.

In a second aspect of the present invention, a textile machine operation support method is as follows: Operation information regarding operation of a plurality of textile machines is transmitted from the textile machines to a management device and is analyzed by the management device. A result of analysis of the operation information by the management device is transmitted to a portable terminal. A first radio communicator is connected to the management device so as to serve as an access pointer and is disposed at respective a fixed position. A plurality of second radio communicators are connected to the plurality of textile machines respectively so as to serve as relays each of which relays connection between the corresponding textile machine and the access pointer and are disposed at respective fixed positions. The portable terminal is connected to at least either the first radio communicator or one of the second radio communicators. The textile machine operation support method comprises a detection step and a change step, which are performed by the first or second radio communicator connected to the portable terminal. The detection step is performed to detect a radio field intensity of the portable terminal connected to the first or second radio communicator. The disconnection step is performed to disconnect the portable terminal from the first or second radio communicator when the radio field intensity detected by the detection step becomes less than a threshold.

Therefore, the communication status between the radio communicator and the portable terminal can be kept appropriate. Accordingly, an operator can promptly obtain the analysis result displayed on the portable terminal, thereby optimizing the operation of the textile machines and applying maintenance for problematic points. Due to the above-mentioned method, the textile machines can be improved in runnability.

### BRIEF DESCRIPTION OF THE DRAWINGS

FIG. 1 is a conceptual diagram illustrating an overall configuration of a radio communications system according to a present embodiment;
FIG. 2 is a front view of an overall configuration of a spinning machine;
FIG. 3 is a front view of an overall configuration of an automatic winder;
FIG. 4 is a functional block diagram of a relay, an access pointer and a portable terminal;
FIG. 5 is a diagram of a conventional system illustrating variation of radio field intensity according to movement of a portable terminal;
FIG. 6 is a flowchart for disconnecting a portable terminal;
FIG. 7 is a flowchart of a processing performed by an access pointer so that when a portable terminal is connected to the access pointer, the access pointer disconnects the portable terminal therefrom and connects another access pointer thereto;
FIG. 8 is an explanatory diagram illustrating a series of events in the present embodiment such that when a portable terminal connected to a relay is carried (moved), the portable terminal is disconnected from the relay and is reconnected to another relay; and
FIG. 9 is an explanatory diagram of a radio communications system according to an alternative embodiment.

### DETAILED DESCRIPTION OF THE PREFERRED EMBODIMENTS

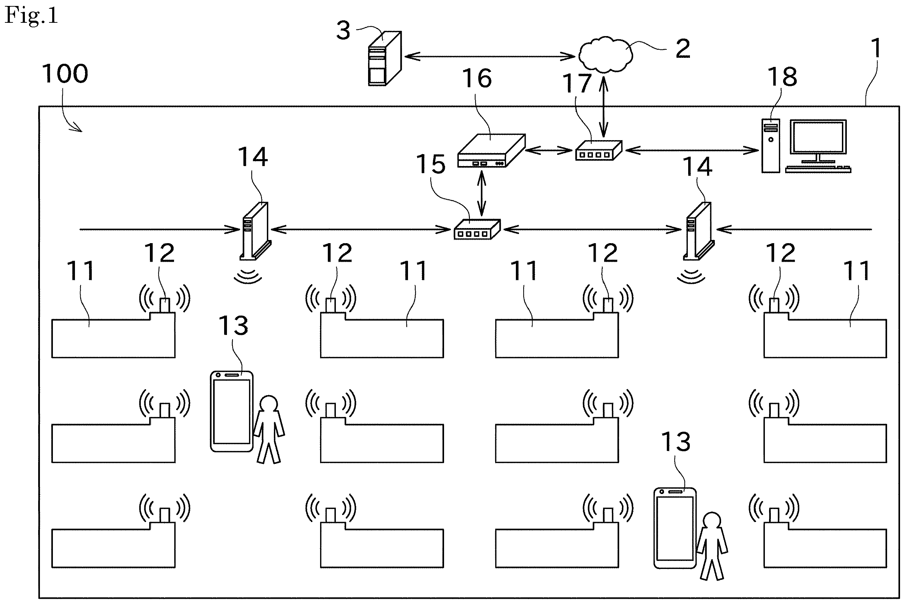

An embodiment of the present invention will be described with reference to the drawings. First, referring to FIG. 1, a radio communications system 100 according to the embodiment will be described. FIG. 1 is a conceptual diagram of an overall configuration of the radio communications system 100 serving as a textile machine operation support system.

The radio communications system 100 is configured according to a network standard such as LAN (Local Area Network). More specifically, the radio communications system 100 includes a wired LAN and a wireless LAN. The radio communications system 100 may include a CAN (Controller Area Network) for a factory, for example, in addition to the LAN

For example, the radio communications system 100 is used for collecting and managing information regarding a plurality of textile machines 11 (serving as industrial machines) in a textile factory 1. The information regarding each textile machine 11 means some pieces (or kinds) of information (referred to as "operation information") generated according to operation of the corresponding textile machine 11. More specifically, the pieces of information defined as the information regarding each textile machine 11 means pieces of information regarding respective statuses of some kinds of devices constituting the corresponding textile machine 11. To obtain the information regarding the corresponding textile machine 11, each textile machine 11 is provided with a sensor, for example. The radio communications system 100 is connected via the internet 2 to an external server 3, for example. Therefore, information regarding the textile factory 1 and other textile factories can be gathered and statistically processed in the external server 3. The radio communications system 100 may be a closed network that is not connected to WAN (Wide Area Network) such as the internet.

Devices constituting the radio communications system 100 will now be described briefly. The textile factory 1 is equipped with a plurality of relays (i.e., second radio communicators) 12, a plurality of portable terminals 13 and a plurality of access pointers (i.e., first radio communicators) 14, thereby configuring a wireless network. Each access pointer 14 functions as a master unit. Each relay 12 functions as a slave unit (or station). A part of the wireless network may be replaced with a wired network. For example, one or some of the relays 12 may be wired to the access pointer or pointers 14, a later-discussed first network hub 15 or so on. Incidentally, the "relay" may also be referred to as a "repeater".

The plurality of textile machines 11 are connected to the respective relays 12. Each textile machine 11 can be connected via a cable to the relay 12. Each relay 12 has a radio communication function so that the relay 12 can be wirelessly connected to a device within a communicable range surrounding the relay 12. Therefore, the relays 12 connect the textile machines 11 serving as industrial machines to a wireless network, so that the information regarding the textile machines 11 can be wirelessly transmitted to a device or devices other than the textile machines 11. Basically, the portable terminals 13 and the access pointers 14 are wirelessly connected to the relays 12. The present embodiment is based on an assumption that the relays 12 do not communicate with each other, although the relays 12 are communicable with each other. Each access pointer 14 has both a radio communication function and a cable communication function. Each access pointer 14 may be wirelessly connected directly to the portable terminal 13. Any adjoining relays 12 are arranged so that their communicable ranges overlap each other. Similarly, any adjoining access pointers 14 are arranged so that their communicable ranges overlap each other.

The textile factory 1 is equipped with the access pointer 14, the first network hub 15, an internal server 16, a second network hub 17 and a management device 18, thereby configuring a wired network. The number of access pointers 14 is single or plural. The number of other devices is basically single, however, may be pluralized, or may be omitted. A part of the wired network may be replaced with a wireless network.

The access pointer 14 is wired to the internal server 16 via the first network hub 15. The internal server 16 is wired to the management device 18 and the internet 2 via the second network hub 17. In the textile factory 1, only the management device 18 may be disposed in another room. In other word, the management device 18 may be disposed outside of the radio communicable range of the radio communications system 100.

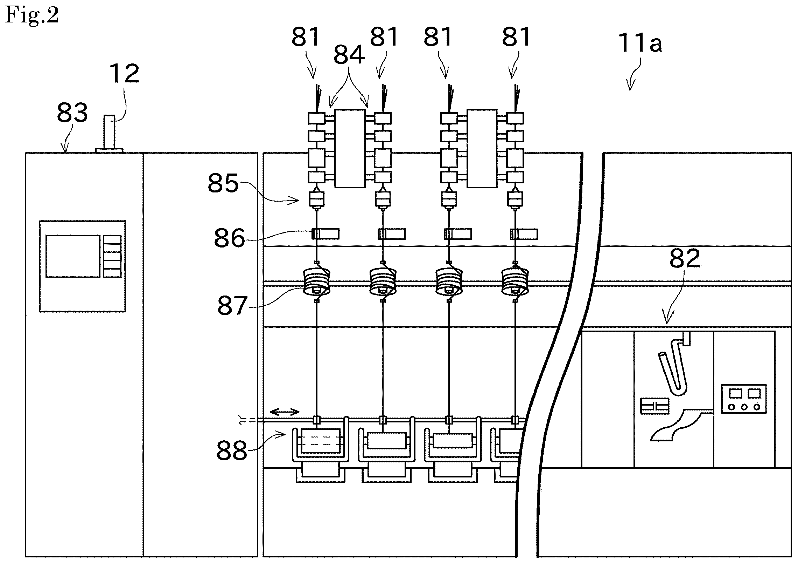

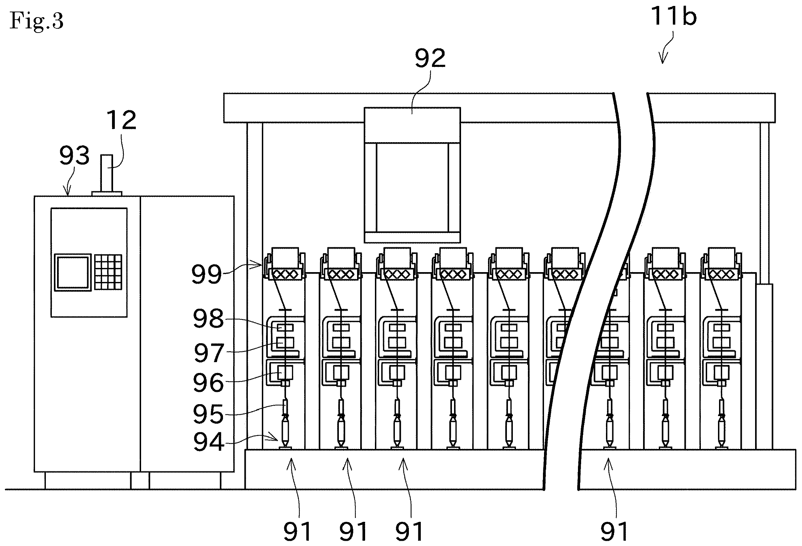

The devices serving as the components of the radio communications system 100 will now be described in detail. The textile machines 11 are immovably disposed at respective fixed positions. More specifically, the textile machines 11 may be made movable, however, the textile machines 11 are kept from moving while they are operated. Referring to FIGS. 2 and 3, description will now be given of a spinning machine 11a and an automatic winder 11b each of which serves as the textile machine 11. FIG. 2 is a front view of an overall configuration of the spinning machine 11a, and FIG. 3 is a front view of an overall configuration of the automatic winder 11b.

Referring to FIG. 2, the spinning machine 11a includes a plurality of spinning units (or spinning spindles) 81 which are aligned, a yarn joining cart 82, a machine base controller (control unit) 83, and an unillustrated doffer.

Each spinning unit 81 includes a drafting device 84, an air spinning device 85, a yarn quality measuring device 86, a yarn accumulator 87, and a winding device 88. The drafting device 84 includes multiple pairs of rollers through which a sliver is rolled out as a fiber bundle. The air spinning device 85 includes a nozzle mechanism for blowing a swirling airflow to the fiber bundle so as to form a yarn. The yarn quality measuring device 86 measures a quality of running yarn (e.g., a yarn thickness or its variation) by using an optical sensor or so on. The yarn accumulator 87 includes an outer peripheral surface on which yarn is wound to be temporarily accumulated. The temporal accumulation of yarn solves difference between a spinning speed of the air spinning device 85 and a winding speed of the winding device 88, while the difference occurs for any reason. The winding device 88 traverses a yarn while winding the yarn around a winding tube, thereby forming a package.

The yarn joining cart 82 can travel along the alignment direction of the spinning units 81. When one of the spinning units 81 has disconnection of the yarn, the yarn joining cart 82 travels on unillustrated rails until it arrives and stops at the spinning unit 81 having the yarn divided. The yarn joining cart 82 includes a catching device and a yarn joining device. The catching device catches the yarn extended from the air spinning device 85 and the yarn extended from the package by suction airflow or so on, and guides the yarns to the yarn joining device. The yarn joining device joins the guided yarns to each other.

The machine base controller 83 is a controller for centrally managing the plurality of spinning units 81. The machine base controller 83 includes an arithmetic device such as CPU, a storage device such as a flash memory or a hard desk, and a communication device. The arithmetic device controls the plurality of spinning units 81, the yarn joining cart 82 and so on by executing a program stored in the storage device. The communication device communicates to each spinning unit 81, each relay 12 and so on. The machine base controller 83 also includes an operation device to be operated by an operator and a display device for displaying various pieces of information.

Referring to FIG. 3, the automatic winder 11b includes a plurality of winder units (or winder spindles) 91 which are aligned, a doffer 92, and a machine base controller (control unit) 93.

Each winder unit 91 includes a yarn feeding part 94, a yarn unwinding assisting device 95, a tensioning device 96, a yarn joining device 97, a yarn quality measuring device 98 and a winding part 99. The yarn feeding part 94 supports a yarn feeding bobbin. A yarn unwound from the yarn feeding bobbin has a portion (referred to as "balloon") that is swung by a centrifugal force to be centrifugally expanded. The yarn unwinding assisting device 95 contacts the balloon so as to hinder the yarn from being excessively swung so that the yarn can be unwound with a tension from the yarn feeding bobbin. The yarn joining device 97 guides the yarn unwound from the yarn feeding bobbin and a yarn from the package and joins the guided yarns to each other. The yarn quality measuring device 98 measures a quality of running yarn (e.g., a yarn thickness or its variation) by using an optical sensor or so on. The winding part 99 traverses a yarn while winding the yarn around a winding tube, thereby forming a package.

The doffer 92 can travel along the alignment direction of the winder units 91. When a package in one of the winder units 91 becomes full-winding, the doffer 92 travels until it arrives and stops at the winder unit 91 having the full-winding package. The doffer 92 removes the full-winding package from the winder unit 91 and supplies the winder unit 91 with a new winding tube having no yarn wound thereon.

The machine base controller 93 basically has the same configuration as the machine base controller 83 except that a controlled object is not the spinning unit 81 but the winder unit 91.

The above-mentioned machines 11a and 11b are mere embodiments of the textile machine 11. The radio communications system 100 is adaptable to any kind of textile machines 11 which may be different from the spinning machines 11a or the automatic winders 11b. For example, the radio communications system 100 is adaptable to ring spinning machines, open-end spinning machines, roving frames, drawing frames, carding machines, weaving machines, or knitting machines. Further, different kinds of textile machines 11 (for example, both the spinning device 11a and the automatic winder 11b) can be managed by the common radio communications system 100.

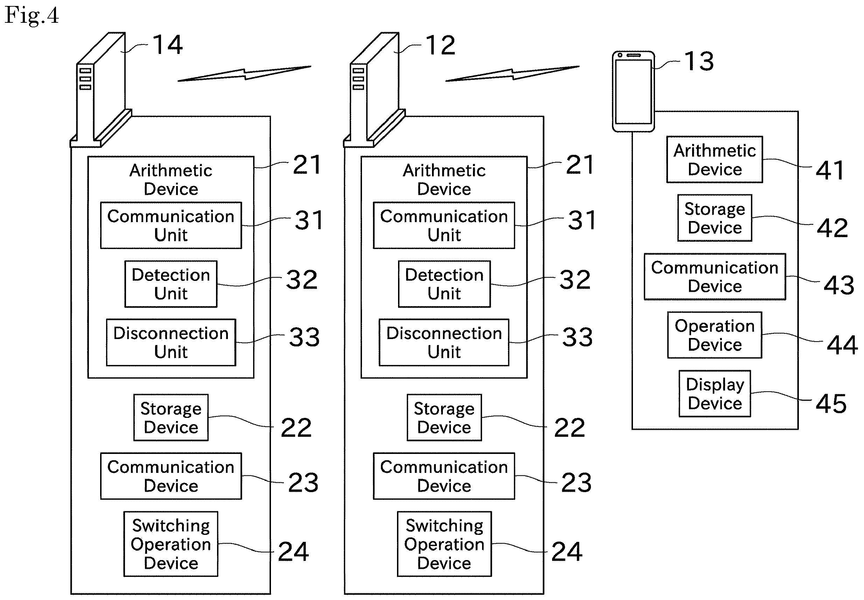

The relay 12 and the access pointer 14 will be described with reference to FIG. 4. FIG. 4 is a functional block diagram of the relay 12, the access pointer 14, and the portable terminal 13. In this embodiment, a common radio communicator selectively serves as either the relay 12 or the access pointer 14. In other words, the radio communicator is switchable between a relay mode for serving as the relay 12 and an access pointer mode for serving as the access pointer 14.

The radio communicator to serve as either the relay 12 or the access pointer 14 includes an arithmetic device 21, a storage device 22, a communication device 23, and a switching operation device 24. The arithmetic device 21, e.g., CPU, can perform various processes by executing corresponding programs. The storage device 22, e.g., a flash memory or a hard desk, stores programs to be executed by the arithmetic device 21 and set values inputted by an operator. The communication device 23 includes an antenna for radio communication and a connector to which a cable for wired communication is connected, for example. The switching operation device 24 is a hardware switch (e.g., DIP switch), which is operable for selectively setting the radio communicator in either the relay mode for serving as the relay 12 or the access pointer mode for serving as the access pointer 14.

Each relay 12, i.e., the radio communicator set in the relay mode by operating the switching operation device 24, is attached to any portion of the textile machine 11. In this embodiment, the relay 12 is mounted on an upper surface of the machine base controller 83 or 93. The textile machine 11 is immovably disposed at a fixed position, so that the relay 12 is also immovably disposed at its fixed position. On the other hand, each access pointer 14 is attached to a wall, a ceiling or so on of the textile factory 1, so that the access pointer 14 is also immovably disposed at its fixed position. Therefore, a positional relation among the textile machine 11, the relay 12 and the access pointer 14 is constant. Also, a distance between each relay 12 and each access pointer 14, a distance of each relay 12 from any other relay 12, and a distance of each access pointer 14 from any other access pointer 14 are constant. Each relay 12 receives the operation information from the corresponding textile machine 11 and transmits the operation information to the management device 18 via the access pointer 14, the internal server 16 and so on. The operation information transmitted from each relay 12 to the management device 18 is information regarding the amount of products produced by each unit (or each spindle, e.g., the spinning unit (spindle) 81 or the winder unit (spindle) 91), the number of alarms, positions of alarms, or measurement results of yarn quality, for example. Each of the relays 12 and the access pointers 14 may be removable from one position, e.g., the textile machine 11 or the wall, to be moved to another position.

When any radio communicator serves as the relay 12, its arithmetic device 21 functions as any of a communication unit 31, a detection unit 32 and a change unit 33 by executing a corresponding program. The communication unit 31 performs wired or radio communication by mainly controlling the communication device 23. The detection unit 32 detects a communication status regarding communication of the relay 12 to any access pointer 14 based on a radio filed intensity of radio wave received from the corresponding access pointer 14 or so on. The change unit 33 changes the access pointer 14 connected to the relay 12 to another access pointer 14 based on the communication status detected by the detection unit 32. The access point changing process performed by the change unit 33 will be detailed later.

The portable terminal 13 is a terminal handled and carried by an operator for operating the textile machine 11. For example, a smartphone, a tablet terminal, a laptop, or a wearable device such as a smartwatch, can serve as the portable terminal 13. It means that a position of the portable terminal 13 is changed as the operator moves. The portable terminal 13 includes an arithmetic device 41, a storage device 42, a communication device 43, an operation device 44 and a display device 45. The arithmetic device 41, e.g., CPU, can perform various processes by executing corresponding programs. The storage device 42, e.g., a flash memory, stores programs to be executed by the arithmetic device 41 and so on. The communication device 43 is an antenna for radio communication, for example. The operation device 44 is a hardware key or a touch panel to be operated by an operator. The display device 45 displays information received from the internal server 16 or so on in response to operation by an operator.

The plurality of relays 12 and the plurality of access pointers 14 share common BSSID (Basic Service Set Identifier) and are set to have respective frequency channels which differ thereamong. Therefore, the access point for the portable terminal 13 can be changed from one relay 12 or access pointer 14 to another relay 12 or access pointer 14 by only operating the portable terminal 13 to change the frequency channel.

The internal server 16 gathers operation information regarding operation statuses of the textile machines 11 in the textile factory 1 and transmits information corresponding to command from the portable terminal 13 or management device 18 to the management device 18 or portable terminal 13. For example, the information transmitted from the internal server 16 to the portable terminal 13 includes information regarding which textile machine 11 and which unit (e.g., spinning unit 81 or winder unit 91) are operated, information for identifying which textile machine 11 and which unit (e.g., spinning unit 81 or winder unit 91) have alarm generated, matters and schedule of maintenance for each textile machine 11, an operation manual for operating each textile machine 11, and/or so on. For example, the information, i.e., operation information, transmitted from the internal server 16 to the management device 18 includes information regarding operation statuses, such as operation times or production amounts, of each textile machine 11 during a predetermined time and/or information regarding results of statistical processing in quality of yarn. By applying a predetermined operation to the management device 18, a supervisor can deliver a command to any textile machine 11 for local or collective change of settings of the textile machine 11, or a command to an operator in the textile factory 1, via the internal server 16, the access pointer 14 and so on. Also, by the supervisor's applying a predetermined operation to the management device 18, the management device 18 analyzes the operation information and transmits a result of the analysis to the portable terminal 13 or so on. If there are a plurality of textile factories 1, the external server 3 receives a command transmitted by a supervisor via the management device 18 and analyzes a result of analysis of operation information regarding the respective textile factories 1. The management device 18 displays the result of analysis regarding the textile factories 1 and transmits the analysis result to the portable terminal 13. Also, the management device 18 can display information regarding comparison of the results of analyses of the respective textile factories 1 with achievements of the textile factories 1, and can transmit the information regarding the comparison to the portable terminal 13.

A radio communication environment in the textile factory 1 will now be described. First, radio disturbances that may occur in the textile factory 1 and countermeasures will be described. A building as the textile factory 1 has a large area, and there is much powder dust such as cotton fly inside of the building. The textile factory 1 normally has few partitions among the textile machines 11. However, the textile machines 11 themselves can cause radio disturbance. Specifically each textile machine 11 includes a metal member, e.g., a metal frame or a metal casing, through which radio wave can hardly be transmitted. Moreover, the textile machine 11 includes the units (e.g., the spinning units 81 or the winder units 91) juxtaposed with no or slight gaps thereamong, so that the textile machine 11 can hardly refract radio wave, thereby being liable to cause radio disturbance. Furthermore, the textile factory 1 is provided therein with a movable body which moves in each textile machine 11 or another movable body which moves between different textile machines 11. The former movable body is e.g., the doffer 92, the yarn joining cart 82, or a blow cleaner. The blow cleaner is a device for blowing cotton fly generated from the drafting device 84, the yarn joining device 97 or so on. The blow cleaner is taller than the textile machine 11 and includes metal members, thereby being liable to cause radio disturbance. The latter movable body is e.g., a carrier of a can (a container for storing sliver) or the package. Also, an operator moves in the textile factory 1. The movement of the movable body in the textile machine 11 or between the different textile machines 11 and the movement of the operator are irregular. Therefore, a poor communication caused by radio disturbance because of the movable body or the operator occurs irregularly. When the poor communication occurs, necessary information may not be displayed on the portable terminal 13 held by the operator, or necessary information may not be transmitted from the corresponding textile machine 11 to the internal server 16 or so on. To reduce influence of the poor communication, it is desired to reduce the occurrence of radio disturbance or to configure a stable communication environment immediately after recovery from the poor communication caused by radio disturbance, for example.

To reduce the occurrence of radio disturbance, the access pointers 14 are mounted higher than the textile machines 11, for example. The relays 12 are mounted on the upper surfaces of the textile machines 11. By mounting the access pointers 14 and the relays 12 at high positions, radio wave is hardly shielded by the textile machines 11 or so on, thereby expanding a communicable range. Further, it is desired that the access pointers 14 and the relays 12 are arranged so as to have no obstacle (especially, metal obstacle) on a line between each access pointer 14 and each relay 12. Further, each relay 12 is disposed at an end of an alignment direction of the units of the corresponding textile machine 11 (especially, on a side closer to the corresponding access pointer 14, as shown in FIG. 1). Due to the above-mentioned configuration, radio disturbance can hardly occur in the textile factory 1. However, the above-mentioned location of the access pointers 14 and the relays 12 is a mere example. The access pointers 14 and the relays 12 may be disposed at positions different from the above-mentioned positions. Also, development of communication environment between the access pointers 14 or relays 12 and the portable terminal 13 can reduce the occurrence of radio disturbance.

Radio interference that may occur in the textile factory 1 and countermeasures will now be described. The radio interference is liable to occur when an additional communicator is disposed in the textile factory 1. If an additional textile machine 11 having no relay 12 or so on is disposed in the textile factory 1, radio wave from the additional textile machine 11 (i.e., a radio circuit of the additional textile machine 11) may be set to have a frequency band, channel or so on causing radio interference of the access pointers 14 and relays 12 and so on. Further, component devices of the common radio communications system 100 may have radio interference therebetween because their available channels are limited.

To reduce the radio interference, it is desired that the access pointers 14 and the relays 12 transmit radio wave so that times when radio waves are simultaneously transmitted from at least two of the access pointers 14 and relays 12 become as few as possible. For example, different periods are allotted to the access pointers 14 and relays 12 respectively, and each of the access pointers 14 and relays 12 transmits radio wave only during its allotted period, thereby reducing radio interference. Each of the access pointers 14 and relays 12 may change a channel for its communication if its communication speed is low. The change of channel may be performed by either a device or an operator. If it is performed by the device, the channel is automatically changed when the communication speed becomes less than a certain value, for example. If it is performed by the operator, the operator logs in the access pointer 14 or relay 12 and changes its set channel when the operator decides to change a channel based on detection result of an application for measuring the communication speed, for example.

Communication break caused by power-off that may occur in the textile factory 1 will now be described. For example, if the relays 12 are supplied with power from the respective textile machines 11, the power supply from the corresponding textile machine 11 may be irregularly interrupted when the corresponding textile machine 11 is given maintenance, change of settings, change of devices, or so on. Also, blackout, including instantaneous power failure and instantaneous voltage drop, may occur depending on a local situation or an environmental situation. In case of such a power-off, communication break occurs. If the communication break occurs, information regarding energy (electric power and air) consumption of the textile machine 11 and information needed for predictive maintenance of the textile machine 11 are not transmitted to the internal server 16 and so on. As a result, productivity and product quality of the textile machine 11 may be affected. Especially, if there are many textile machines 11 (i.e., relays 12), much information is stored during the communication break. To reduce the influence of communication break, it is desired that a stable communication environment can be configured immediately after recovery from the communication break.

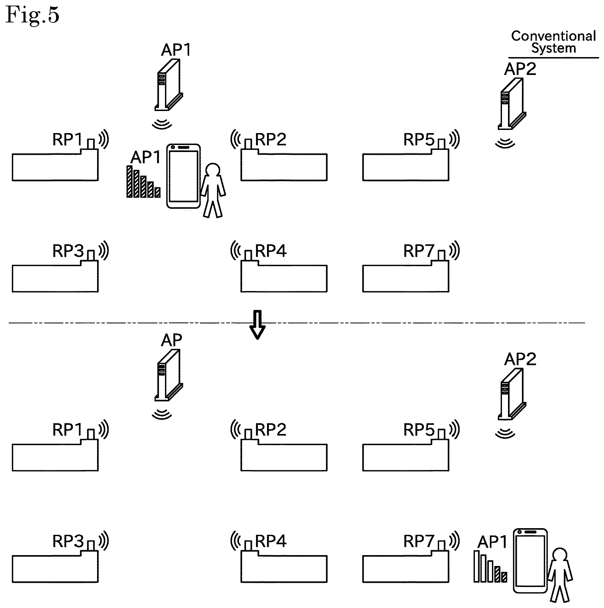

A situation that the communication status between the portable terminal 13 and either the relay 12 or the access pointer 14 becomes worse according to movement of the portable terminal 13 and a solution processing of disconnecting the portable terminal 13 will now be described with reference to FIGS. 5 to 8. In some of FIGS. 5 to 9, the plurality of access pointers 14 are differentiated by designation of reference numerals "APn" (n=1, 2, 3,...), and the plurality of relays 12 are differentiated by designation of reference numerals "RPn" (n=1, 2, 3,...).

First, referring to FIG. 5, description will be given of a conventional radio communications system in which the communication status varies when an operator carries a portable terminal. In FIG. 5, each relay is marked to indicate a name of an access pointer or a relay connected to the portable terminal and a radio field intensity of radio wave from the access pointer or relay. For example, in a stage illustrated as an upper diagram of FIG. 5, the portable terminal is connected to an access pointer API, and a radio filed intensity of radio wave from the access pointer API detected by the portable terminal is 5 on a scale of 1 to 5.

Referring to a lower diagram of FIG. 5, a situation that the portable terminal is carried by an operator (i.e., moved with an operator) away from the access pointer API will now be considered. In this situation, the radio field intensity of the access pointer API (in other words, the radio field intensity of the portable terminal 13 viewed from the access pointer API) becomes weaker as the distance of the portable terminal from the access pointer AP1 is increased. However, the processing of reconnecting the portable terminal to another access pointer is not performed because the communication between the portable terminal and the access pointer API is still possible. As a result, the situation that the communication speed is low or unstable is still maintained.

The same problem may occur if the portable terminal is connected to a relay instead of the access pointer.

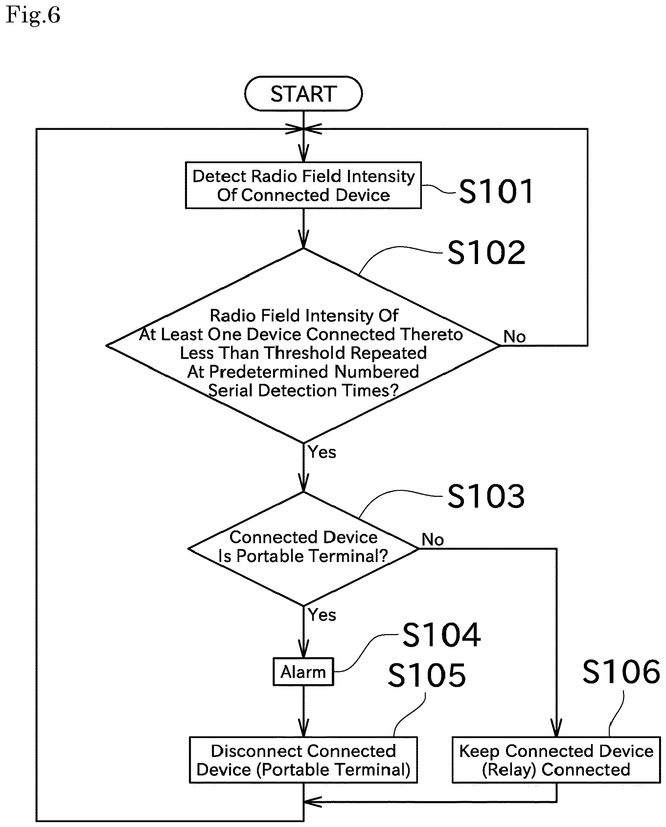

On the contrary, in the present embodiment, the relay 12 or access pointer 14 connected to the portable terminal 13 performs a processing illustrated as a flowchart of FIG. 6 so as to be disconnected from the portable terminal 13 having an inappropriate communication status (or a small radio filed intensity). The disconnected portable terminal 13 searches devices (the relays 12 or the access pointers 14) which the portable terminal 13 should be reconnected. In this regard, any device having a radio communication function has a general function to search for its access point so as to be selectively connected to another device having a great radio field intensity. In this embodiment, the portable terminal 13 also has this function. Therefore, the portable terminal 13 is reconnected to the relay 12 or access pointer 14 having a great radio field intensity. As a result, the communication status of the portable terminal 13 can be developed. To simplify the following description, only a processing performed by the access pointer 14 to disconnect the portable terminal 13 therefrom will be described on an assumption that the same processing can be also performed by the relay 12.

First, the detection unit 32 of the access pointer 14 performs a detection step S101 of detecting a radio field intensity of a device (or devices) connected thereto. The device or devices connected thereto is/are the relay 12 and the portable terminal 13. The processing as the step S101 is performed once predetermined seconds.

Subsequently, the access pointer 14 performs a radio field intensity requirement judging step S102 of judging whether or not the radio field intensity of the portable terminal 13 is less than a threshold repeatedly at predetermined numbered serial detection times. The threshold is set for deciding whether or not the portable terminal 13 connected to the access pointer 14 must be disconnected. In the present embodiment, the threshold of radio field intensity is 3. Therefore, at each detection time, it is judged whether or not the radio field intensity is less than 3 (i.e., whether the radio field intensity is either 1 or 2 or is any of 3, 4 and 5). In consideration that the radio field intensity is variable for some reasons, e.g., measurement error and radio interference, the number of repeated detection of the radio field intensity less than the threshold is set as the requirement for decision of disconnecting the portable terminal 13, so that the connected portable terminal 13 can be disconnected only when its communication status is actually inappropriate.

Alternatively, in the step S101, the radio field intensity of the portable terminal 13 may be continuously detected by the access pointer 14. In this case, in the step S102, the access pointer 14 confirms that the detected radio field intensity portable terminal 13 meets the radio field intensity requirement when the radio field intensity is less than the threshold continuously for a predetermined period.

The access pointer 14 performs a disconnection targeting step S103 of judging whether or not the device judged to meet the radio field intensity requirement is actually the portable terminal 13. It is because the device connected to the access pointer 14 and judged to meet the radio field intensity requirement may be the relay 12 instead of the portable terminal 13. Moreover, basically, the communication statuses of the relays 12 and the access pointers 14 hardly vary because the relays 12 and the access pointers 14 are disposed immovably at respective fixed positions. It cannot be said that after one relay 12 is disconnected from the access pointer 14, any other relay 12 having an appropriate communication status to be connected to the access pointer 14 will surely exist. Therefore, it is better that the relay 12 connected to the access pointer 14 is kept from being disconnected from the access pointer 14. On the contrary, the portable terminal 13 connected to the access pointer 14 is desired to be disconnected from the access pointer 14 when the communication status of the portable terminal 13 is inappropriate. Further, the relays 12 or the access pointers 14 are basically arranged in the textile factory 1 so that all areas where operators may take their places become communicable areas for the operators. To ensure considerable communication qualities in correspondence to the arrangement of the relays 12 or the access pointers 14, each pair of adjoining relays 12, adjoining access pointers 14, or adjoining relay 12 and access pointer 14 have communicable areas sufficiently overlapping each other. Therefore, the portable terminal 13 disconnected from one access pointer 14 can be reconnected to the relay 12 or another access pointer 14 with a high possibility of success. In this meaning, it is also desired to disconnect the portable terminal 13 having an inappropriate communication status.

The access pointer 14 adopts MAC addresses for judging whether the device connected thereto is the portable terminal 13 or the relay 12. More specifically, when the radio communications system 100 is configured or renewed, each of the relays 12 and access pointers 14 stores MAC addresses of the respective other relays 12 or access pointers 14 in its storage device 22 so as to know the partner devices constituting the radio communications system 100. Therefore, the access pointer 14 judges that the device connected thereto is the portable terminal 13 when the MAC address of the device whose radio field intensity meets the radio field intensity requirement is found to be different from all the MAC addresses stored in the storage device 22. On the other hand, the access pointer 14 judges that the device connected thereto is not the portable terminal 13 (i.e., is the relay 12) when the MAC address of the device whose radio field intensity meets the radio field intensity requirement is found as one of the MAC addresses stored in the storage device 22.

When it is judged that the device connected to the access pointer 14 meets both the radio field intensity requirement and the disconnection targeting requirement, the disconnection unit 33 of the access pointer 14 performs an alarm step S104 of generating an alarm, and performs a disconnection step S105 of disconnecting the portable terminal 13 meeting both the radio field intensity requirement and the disconnection targeting requirement therefrom. For example, the alarm is blinking of a lamp of the access pointer 14, an alarm sound, or so on. According to the generation of alarm, occurrence of a fault status is logged. Alternatively, the alarm (the alarm step S104) may be omitted.

On the contrary, when it is judged that the device connected to the access pointer 14 meets the radio field intensity requirement but does not meet the disconnection targeting requirement, i.e., when the device connected thereto is found as the relay 12, the access pointer 14 performs a step S106 of maintaining the connection thereof to the relay 12. In this regard, all the access pointers 14 repeatedly perform the serial steps of FIG. 6. Therefore, if the operator further moves so that any one of the access pointers 14 comes to be connected to the portable terminal 13 carried by the operator and judges the portable terminal 13 as meeting both the radio field intensity requirement and the disconnection targeting requirement, the access pointer 14 disconnects the portable terminal 13 therefrom.

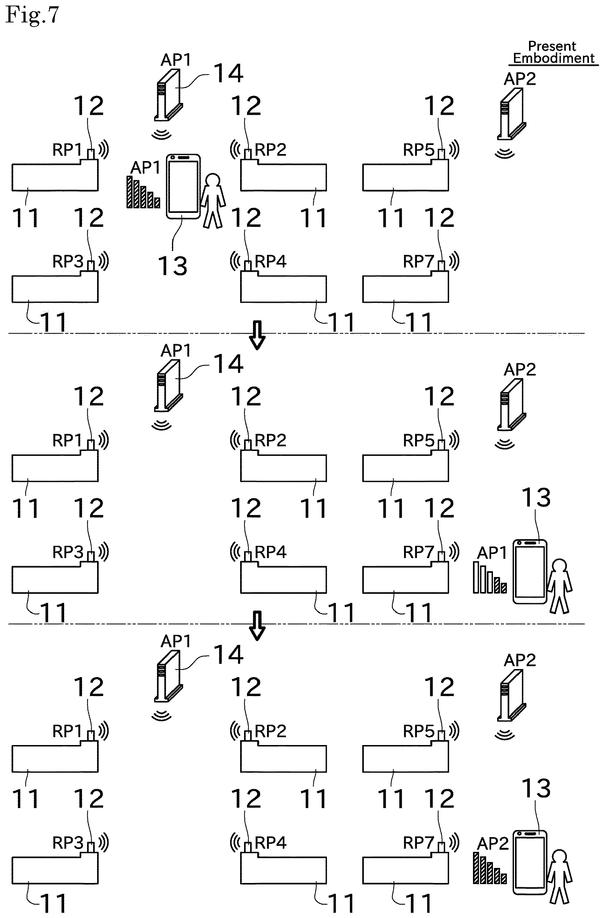

As mentioned above, in the present embodiment, the access pointer 14 connected to the portable terminal 13 automatically disconnects the portable terminal 13 therefrom when the radio field intensity of the portable terminal 13 becomes low. Therefore, the communication status of the portable terminal 13 can be developed when any relay 12 or any access pointer 14 other than the last access pointer 14 connected to the portable terminal exists close to the portable terminal 13. Hereinafter, a processing performed by the access pointer 14 according to the present embodiment when the same situation as that of FIG. 5 occurs will be described with reference to FIG. 7.

An upper diagram of FIG. 7 is identical to that of FIG. 5. Afterward, referring to a middle diagram of FIG. 7, if an operator carries the portable terminal 13, the radio field intensity of the portable terminal 13 received by an access pointer API becomes 2 on a scale of 1 to 5, thereby meeting both the radio field intensity requirement and the disconnection targeting requirement. Accordingly, the access pointer API disconnects the portable terminal 13 therefrom. Afterward, referring to a lower diagram of FIG. 7, the portable terminal 13 is reconnected to another access point AP2 having a great radio field intensity, thereby developing the communication status of the portable terminal 13. Alternatively, in the stage illustrated as the lower diagram of FIG. 7, the portable terminal 13 may be reconnected to any relay 12.

Incidentally, a certain application can be installed in the portable terminal 13 so as to enable the access pointers 14 to designate a new access point to be reconnected to the portable terminal 13. However, the certain application must be laboriously installed in all the portable terminals 13. Further, as a new portable terminal 13 is added, the certain application must be installed in the new portable terminal 13. Further, some portable terminal's OS versions may be inappropriate so that the certain application cannot be installed in the portable terminal 13 or the certain application installed in the portable terminal 13 cannot properly act. On the other hand, the portable terminal 13 does not need to have an additional application installed to display information transmitted from the internal server 16 because any kind of portable terminal has a preinstalled browser which enables the portable terminal to display such information. Therefore, to achieve a sure function for automatic disconnection of the portable terminal 13 with no labor for installing any additional application, it is advantageous that the access pointer 14 spontaneously acts to disconnect the portable terminal 13 therefrom, as described in the present embodiment.

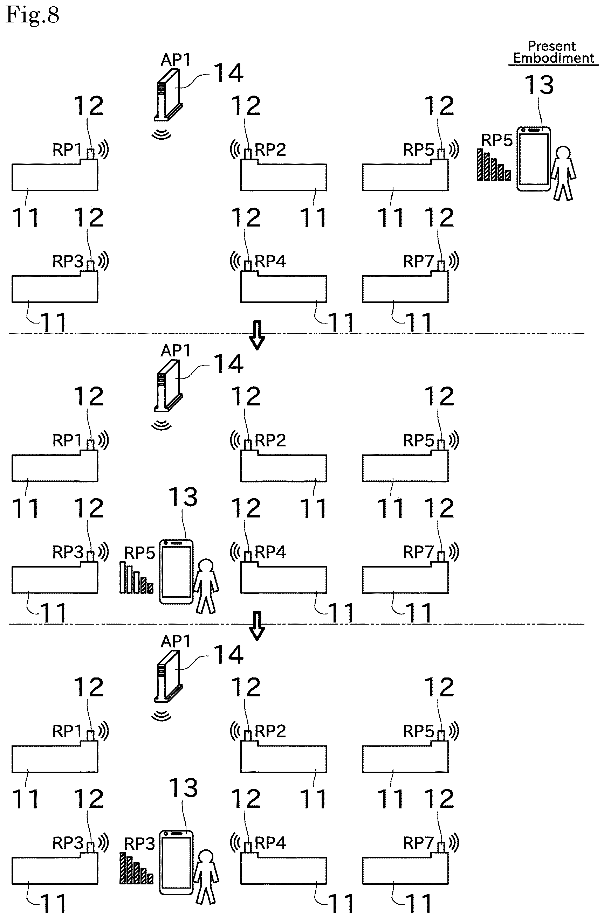

As mentioned above, the processing illustrated in FIG. 6 may be performed by the relay 12. Hereinafter, the processing of FIG. 6 when performed by the relay 12 will be described with reference to FIG. 8.

Referring to an upper diagram of FIG. 8, the portable terminal 13 is connected to a relay RP5 whose radio field intensity is 5 on a scale of 1 to 5. Afterward, a situation as shown in a middle diagram of FIG. 8 occurs that the radio field intensity of the relay RP5 is lowered to 2 on the scale of 1 to 5 because an operator carries the portable terminal 13. In this situation, the relay RP5 judges the device connected thereto as meeting both the radio field intensity requirement and the disconnection targeting requirement and disconnects the portable terminal 13 serving as the device connected thereto from itself. Afterward, referring to a lower diagram of FIG. 8, the portable terminal 13 is reconnected to another relay RP3 having a great radio field intensity. Accordingly, the communication status of the portable terminal 13 is developed. Alternatively, in the stage illustrated as the lower diagram of FIG. 8, the portable terminal 13 may be reconnected to the access pointer 14.

The function for automatic disconnection of the portable terminal 13 can be selectively set to be valid or invalid. The validity/invalidity setting of this function can be simultaneously performed for all the relays 12 or all the access pointers 14. Alternatively, the validity/invalidity setting of this function may be performed by an operator for only the relay 12 or access pointer 14 selected by the operator.

An alternative embodiment as modification of the above-mentioned embodiment will be described. In the following description of the alternative embodiment and in drawings of the alternative embodiment, the same members as (or members similar to) those in the foregoing embodiment may be designated by the same reference numerals as those in the foregoing embodiment, and description of such the same or similar members may be omitted.

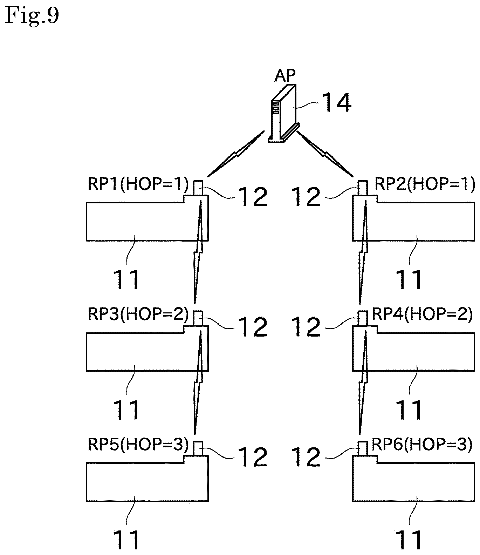

In the foregoing embodiment, all the relays 12 are each connected directly to the corresponding access pointer 14. On the contrary, in the present alternative embodiment, at least one of the relays 12 is wirelessly connected via another relay 12 to the access pointer 14. The number of relays 12 serially relaying a radio communication to the access pointer 14 is referred to as a hopping number (HOP). Referring to FIG. 9, each of the relays RP1 and RP2 is wirelessly connected directly to the access pointer 14 (meaning "HOP=1"). Each of the relays RP3 and RP4 is wirelessly connected to the access pointer 14 via the relay RP1 or RP2 (meaning "HOP=2"). Each of the relays RP5 and RP6 is wirelessly connected to the access pointer 14 via both the relay RP1 or RP2 and the relay RP3 or RP4 (meaning "HOP=3"). Due to this alternative embodiment, the relays 12 can wirelessly communicate with the access pointer 14 even if one or some relays 12 are distant from the access pointer 14. Besides, the portable terminal 13 can be connected to any relay 12 regardless of the hopping number.

As mentioned above, the radio communications system 100 comprises the plurality of textile machines 11 and the management device 18 for analyzing the operation information regarding operation of the plurality of textile machines 11. The radio communications system 100 is configured so as to transmit the operation information from the textile machines 11 to the management device 18, and so as to transmit the result of analysis of the operation information by the management device 18 to the portable terminal 13. The radio communications system 100 comprises the access pointer 14 and the plurality of relays 12. The access pointer 14 is connected to the management device 18, and is immovably disposed at the fixed position. The plurality of relays 12 are connected to the plurality of textile machines 11 respectively so that each relay 12 relays connection between the corresponding textile machine 11 and the access pointer 14, and the plurality of relays 12 are immovably disposed at the respective fixed positions. At least either the access pointer 14 or each of the relays 12 includes the communication unit 31, the detection unit 32 and the disconnection unit 33. The communication unit 31 is connectable to the portable terminal 13 to communicate with the portable terminal 13 connected thereto. The detection unit 32 performs the detection step of detecting the radio field intensity of the portable terminal 13 connected to the relay 12 or the access pointer 14. The disconnection unit 33 performs the disconnection step of disconnecting the portable terminal 13 when the radio field intensity detected by the detection unit 32 becomes less than the threshold.

Therefore, due to the disconnection of the portable terminal 13 having an inappropriate communication status by the relay 12 or the access pointer 14, the portable terminal 13 can be urged to be reconnected to another relay 12 or access pointer 14 having an appropriate communication status. Accordingly, the portable terminal 13 can keep the appropriate communication status of any relay 12 or access pointer 14 connected thereto. The operator can promptly obtain the analysis result displayed on the portable terminal 13 so that the analysis result can be used to optimize operation of the textile machines 11, to apply maintenance for problematic points, or for any other purpose. As a result, operability of the textile machines can be developed. Further, the above-mentioned processing can be easily adapted to various portable terminals 13 because it does not require installation of an application for managing and changing connection of the relay 12 or access pointer 14 to the portable terminal 13 so that the portable terminal 13 does not need to be controlled in action except that the disconnection of the portable terminal 13 may be needed.

In the radio communications system 100 according to the present embodiment, the communication unit 31 of the relay 12 or access pointer 14 is also communicable to any relay 12. The disconnection unit 33 can distinguish whether the communication unit 31 is connected to the portable terminal 13 or the relay 12 so that, of the relay 12 and the portable terminal 13, only the portable terminal 13 is selectively disconnected from the communication unit 31 automatically by the disconnection unit 33.

The above-mentioned configuration is based on consideration as follows: The communication status between the relay 12 and the access pointer 14 or between one relay 12 and another relay 12 is hardly variable. It cannot be said that after one relay 12 is disconnected from the communication unit 31, any other relay 12 having a communication status appropriate to serve as an access point for the communication unit 31 will surely exist. Therefore, the relay 12 connected to the communication unit 31 does not desire to be automatically disconnected from the communication unit 31. On the contrary, the communication status between the relay 12 or access pointer 14 and the portable terminal 13 may often become worse according to movement of the portable terminal 13. Therefore, the portable terminal 13 connected to the communication unit 31 desires to be automatically disconnected from the communication unit 31.

In the radio communications system 100, at least either the access pointer 14 or each of the relays 12 includes the storage device 22 for storing MAC addresses of the respective relays 12. The disconnection unit 33 compares the MAC address of the relay 12 or the portable terminal 13 connected to the communication unit 31 with the MAC addresses of the respective relays 12 stored by the storage device 22 so that the distinguishment of whether the portable terminal 13 or the relay 12 is connected to the communication unit 31 is based on the comparison.

Therefore, such an easy process enables the disconnection unit 33 to distinguish whether the relay 12 or the portable terminal 13 is connected to the communication unit 31.

In the radio communications system 100, the disconnection unit 33 disconnects the portable terminal 13 from the communication unit 31 when the radio field intensity of the portable terminal 13 is less than the threshold repeatedly at the predetermined numbered serial detection times or continuously for the predetermined detection period.

Therefore, in a case where the radio filed intensity is temporarily lowered and is quickly recovered to an appropriate level, the portable terminal 13 connected to the communication unit 31 is kept from being disconnected from the communication unit 31, thereby inhibiting waste disconnection of the portable terminal 13.

The foregoing description is given of a preferred embodiment of the invention and an alternative embodiment. The above-mentioned configuration can be modified as follows:

In the foregoing embodiments, a timing for performing the processing of disconnecting the portable terminal 13 is not specified. In this regard, for example, a communication traffic volume per unit time between the portable terminal 13 and any relay 12 or access pointer 14 may be measured, and the processing of disconnecting the portable terminal 13 may be performed at a timing when the communication traffic volume becomes small. In case of transmission of emergent information or information based on operation of the portable terminal 13, the disconnection of the portable terminal 13 may be performed after the transmission of the information is completed. Therefore, the information with high urgency can be promptly transmitted and a waiting time of an operator or a supervisor can be shortened.

The foregoing description is adaptation of the radio communications system 100 to the textile factory 1. The radio communications system 100 may be also adaptable to any other kind of factory. In this alternative case, instead of the textile machine 11, industrial machines used in the other kind of factory are connected to the network by the respective relays 12. The radio communications system 100 may be also adaptable to an office or a commercial facility instead of a factory.

## Claims

1. A textile machine operation support system comprising:
a plurality of textile machines;
a management device for analyzing operation information regarding operation of the plurality of textile machines, the operation information being transmitted from the textile machines to the management device, and a result of analysis of the operation information by the management device being transmitted to a portable terminal;
a first radio communicator connected to the management device so as to serve as an access pointer, and immovably disposed at a fixed position; and
a plurality of second radio communicators connected to the plurality of textile machines respectively so as to serve as relays each of which relays connection between the corresponding textile machine and the access pointer, and are immovably disposed at respective fixed positions,
at least either the first radio communicator or each of the second radio communicators including:
a communication unit connectable to the portable terminal to communicate with the portable terminal connected thereto;
a detection unit for detecting a radio field intensity of the portable terminal connected to the first radio communicator or the second radio communicator; and
a disconnection unit for disconnecting the portable terminal when the radio field intensity detected by the detection unit becomes less than a threshold.

2. The textile machine operation support system according to claim 1,
wherein the communication unit is also communicable to any second radio communicator, and
wherein the disconnection unit can distinguish whether the communication unit is connected to the portable terminal or the second radio communicator so that, of the second radio communicator and the portable terminal, only the portable terminal is selectively disconnected from the communication unit automatically by the disconnection unit.

3. The textile machine operation support system according to claim 2,
wherein at least either the first radio communicator or each of the second radio communicators includes a storage unit for storing MAC addresses of the respective second radio communicators, and
wherein the disconnection unit compares the MAC address of the second radio communicator or the portable terminal connected to the communication unit with the MAC addresses of the respective second radio communicators stored by the storage unit so that the distinguishment of whether the portable terminal or the second radio communicator is connected to the communication unit is based on the comparison.

4. The textile machine operation support system according to any one of claims 1 to 3,
wherein the disconnection unit disconnects the portable terminal from the communication unit when the radio field intensity of the portable terminal is less than the threshold repeatedly at predetermined numbered serial detection times or continuously for a predetermined detection period.

5. A textile machine operation support method,
wherein operation information regarding operation of a plurality of textile machines is transmitted from the textile machines to a management device and is analyzed by the management device,
wherein a result of analysis of the operation information by the management device is transmitted to a portable terminal,
wherein a first radio communicator is connected to the management device so as to serve as an access pointer and is disposed at a fixed position,
wherein a plurality of second radio communicators are connected to the plurality of textile machines respectively so as to serve as relays each of which relays connection between the corresponding textile machine and the access pointer and are disposed at respective fixed positions, and
wherein the portable terminal is connected to at least either the first radio communicator or one of the second radio communicators,
the textile machine operation support method comprising the following steps performed by the first or second radio communicator connected to the portable terminal:
a detection step of detecting a radio field intensity of the portable terminal connected to the first or second radio communicator; and
a disconnection step of disconnecting the portable terminal from the first or second radio communicator when the radio field intensity detected by the detection step becomes less than a threshold.
